# EUROPEAN PATENT APPLICATION

(11) **EP 3 932 602 A1**
(43) Date of publication of application: **05.01.2022**
(21) Application number: 19917077.0
(22) Date of filing: 25.02.2019
(51) Int. Cl.: B23K 9/04, B23K 26/342, B23K 31/00, C22C 19/03

(54) **WELDING REPAIR METHOD FOR PRECIPITATION-STRENGTHENED CAST PRODUCT**

(71) Applicant: The Chugoku Electric Power Co., Inc., Hiroshima-shi, Hiroshima 730-8701 (JP)
(72) Inventor: NISHIDA, Hidetaka, Hiroshima-shi, Hiroshima 730-8701 (JP)
(74) Representative: Osha Liang
(86) International application number: PCT/JP2019/007007
(87) International publication number: WO 2020/174523

(57) **Abstract**

A precipitation-strengthened cast product welding repair method being a method of repairing a damaged portion of a precipitation-strengthened cast product, the method includes: a first weld layer formation step of forming a first weld layer 54 on a surface of the damaged portion by micro TIG welding using a solid-solution-strengthened welding material having higher toughness than the cast product; and a second weld layer formation step of forming a second weld layer 58 on the first weld layer 54 by building up the second weld layer by laser welding using a dual multi-phase nanostructure intermetallic compound as a welding material and being higher in heat supply rate than the micro TIG welding.

## Description

### [Technical Field]

The present disclosure relates to a precipitation-strengthened cast product welding repair method.

### [Background Art]

The high-temperature strength of cast products, such as the rotor blades, combustor, and transition piece of a turbine at a thermal power generation facility, a nuclear power generation facility, or the like, can be improved by using a precipitation-strengthened super heat resistant alloy (such as a nickel-based super heat resistant alloy) as their material. However, when these cast products are exposed to high-temperature and high-pressure conditions for a long period of time, their surfaces and the like are sometimes cracked or damaged due to thermal stress generated by repetition of starting and stopping of the turbine and the like. This case is handled by performing repair by TIG welding, laser welding, or the like at the power plant.

In this respect, it is conceivable to enhance the effect of the repair by improving the material of the base material. For example, PTL 1 discloses a Ni₃Al-based intermetallic compound made of Al at greater than 5 at% and 13 at%, V at 9.5 at% or greater and 17.4 at% or less, Nb at 0 at% or greater and 5 at% or less, B at 50 ppm by weight or greater and 1000 ppm by weight or less, and Ni as the balance excluding impurities, and having a dual multi-phase structure with a primary L1₂ phase and an (L1₂ + D0₂₂) eutectoid structure. Also, PTL 2 discloses a Ni-based intermetallic compound alloy containing B at 10 to 1000 ppm by weight relative to the total weight of a composition containing Ni as a main component and 2 to 9 atomic% Al, 10 to 17 atomic% V, 0.5 to 8 atomic% (Ta and/or W), 0 to 6 atomic% Nb, 0 to 6 atomic% Co, and 0 to 6 atomic% Cr which make up 100 at% in total, and having a dual multi-phase structure with a primary precipitate L1₂ phase and an (L1₂ + D0₂₂) eutectoid structure.

PTL 3 discloses another repair method including removing a damaged portion of the base material of a gas turbine member or the like, forming an intermediate layer on the removal portion where the damaged portion has been removed, and performing build-up welding thereon to thereby repair the gas turbine member.

### [Citation List]

### [Patent Literatures]

[PTL 1] International Publication No. 2007/086185
[PTL 2] Japanese Patent Application Publication No. 2009-215649
[PTL 3] Japanese Patent Application Publication No. 2013-68085

### [Summary of Invention]

### [Technical Problems]

As it stands, however, welding operations as represented by PTL 3 are very complicated and still inefficient. For example, combustors and transition pieces need heat treatment after they are transported to factories, which requires time and cost since they are large-sized components. Also, in the case of rotor blades, laser welding or TIG welding is performed to handle the thinning of their tip portions, but cracking reoccurs in many cases, which leads to a poor yield.

The present disclosure has been made in view of such circumstances, and an object thereof is to provide a precipitation-strengthened cast product welding repair method capable of reliably and efficiently repairing a precipitation-strengthened cast product.

### [Solution to Problems]

A first aspect of the present disclosure is a precipitation-strengthened cast product welding repair method being a method of repairing a damaged portion of a precipitation-strengthened cast product, the method comprising: a first weld layer formation step of forming a first weld layer on a surface of the damaged portion by micro TIG welding using a solid-solution-strengthened welding material having higher toughness than the cast product; and a second weld layer formation step of forming a second weld layer on the first weld layer by building up the second weld layer by laser welding using a dual multi-phase nanostructure intermetallic compound as a welding material and being higher in heat supply rate than the micro TIG welding.

As described above, the first weld layer is formed at the damaged portion of the base material of the precipitation-strengthened cast product by micro TIG welding (first weld layer formation step), and further the second weld layer is formed on the first weld layer by laser welding higher in heat supply rate than the micro TIG welding (second weld layer formation step). In this way, in the formation of the first weld layer, which is the lower layer closer (or adjacent) to the base material, the amount of heat input per unit time is small but the welding speed is low, so that reliable welding is performed. In the formation of the second weld layer, which is the upper layer, the amount of heat input per unit time is large and the welding time is short. Further, in the first weld layer formation step, a solid-solution-strengthened welding material having higher toughness than the base material is used while, in the second weld layer formation step, a dual multi-phase nanostructure intermetallic compound is used as the welding material. This relaxes thermal stress applied to the repaired portion and thus prevents damaging of the repaired portion and a region around it during and after the repair (e.g., a reoccurrence of fracture or cracking of the repaired portion) while also rendering the base material tolerant to high temperature and enhancing the wear resistance and corrosion resistance.

Thus, with the cast product welding repair method of the present disclosure, a precipitation-strengthened cast product can be repaired reliably and efficiently by appropriately combining a selection of welding materials and manners of heat supply.

A second aspect of the present disclosure is a precipitation-strengthened cast product welding repair method being a method of repairing a damaged portion of a precipitation-strengthened cast product, the method comprising: a first weld layer formation step of forming a first weld layer on a surface of the damaged portion by micro TIG welding using a solid-solution-strengthened welding material having higher toughness than the cast product; a second weld layer formation step of forming a second weld layer on the first weld layer by laser welding using a same welding material as the first weld layer formation step and being higher in heat supply rate than the micro TIG welding; and a third weld layer formation step of forming a third weld layer on the second weld layer by building up the third weld layer by laser welding using a dual multi-phase nanostructure intermetallic compound as a welding material and being higher in heat supply rate than the micro TIG welding.

As described above, the first weld layer is formed at the damaged portion of the precipitation-strengthened cast product by micro TIG welding (first weld layer formation step), the second weld layer is formed on the first weld layer by laser welding higher in heat supply rate than the micro TIG welding (second weld layer formation step), and additionally the third weld layer is formed on the second weld layer by laser welding higher in heat supply rate than the micro TIG welding (third weld layer formation step). In this way, in the formation of the first weld layer, which is the lower layer closest (or adjacent) to the base material, the amount of heat input per unit time is small but the welding speed is low, so that reliable welding is performed. In the formation of the second and third weld layer, which are the upper layers, the amount of heat input per unit time is large and the welding time is short. Further, in the first weld layer formation step and the second weld layer formation step, a solid-solution-strengthened welding material containing a solid-solution-strengthened alloy and having higher toughness than the base material is used while, in the third weld layer formation step, a dual multi-phase nanostructure intermetallic compound is used as the welding material. This relaxes thermal stress applied to the repaired portion and thus prevents damaging of the repaired portion and a region around it during and after the repair (e.g., a reoccurrence of fracture or cracking of the repaired portion) while also rendering the base material tolerant to high temperature and enhancing the wear resistance and corrosion resistance.

Thus, with the cast product welding repair method of the present disclosure, a cast product can be repaired reliably and efficiently by appropriately combining a selection of welding materials and manners of heat supply.

A third aspect of the present disclosure is a precipitation-strengthened cast product welding repair method being a method of repairing a damaged portion of a precipitation-strengthened cast product, the method comprising: a first weld layer formation step of forming a first weld layer on a surface of the damaged portion by laser welding using a solid-solution-strengthened welding material having higher toughness than the cast product; and a second weld layer formation step of forming a second weld layer on the first weld layer by building up the second weld layer by laser welding using a dual multi-phase nanostructure intermetallic compound as a welding material and being higher in heat supply rate than the laser welding.

As described above, the first weld layer is formed at the damaged portion of the base material of the precipitation-strengthened cast product by laser welding (first weld layer formation step), and further the second weld layer is formed on the first weld layer by laser welding using a dual multi-phase nanostructure intermetallic compound as the welding material and being higher in heat supply rate than the first laser welding (second weld layer formation step) . In this way, in the formation of the first weld layer, which is the lower layer closer (or adjacent) to the base material, the amount of heat input per unit time is small but the welding speed is low, so that reliable welding is performed. In the formation of the second weld layer, which is the upper layer, the amount of heat input per unit time is large and the welding time is short. Further, in the first weld layer formation step, a solid-solution-strengthened welding material having higher toughness than the base material is used while, in the second weld layer formation step, a dual multi-phase nanostructure intermetallic compound is used as the welding material. This relaxes thermal stress applied to the repaired portion and thus prevents damaging of the repaired portion and a region around it during and after the repair (e.g., a reoccurrence of fracture or cracking of the repaired portion) while also rendering the base material tolerant to high temperature and enhancing the wear resistance and corrosion resistance.

Thus, with the cast product welding repair method of the present disclosure, a precipitation-strengthened cast product can be repaired reliably and efficiently by appropriately combining a selection of welding materials and welding methods differing in the manner of heat supply.

In the first and second aspects, for example, a current for the micro TIG welding in the first weld layer formation step is set at 50 A or lower.

As described above, the current for the micro TIG welding is set at 50 A or lower. This can reliably prevent damaging of the repaired portion and a region around it during and after the repair (e.g., a reoccurrence of fracture or cracking of the repaired portion).

In the first to third aspects, for example, a thickness of the first weld layer is set at 1 mm or more and 1/3 or less of a total thickness of the weld layers.

As described above, the thickness of the first weld layer is set at 1 mm or more and the thickness of the first weld layer is set at 1/3 or less of the thickness of the entire weld layer. In this way, the welding operation can be completed reliably and quickly. For example, even when the damaged portion is large, the repair can be done within an appropriate time.

Note that, in the first to third aspects, in the first weld layer formation step, the first weld layer is formed so as to cover an exposed surface of the damaged portion.

The first weld layer is formed so as to cover the exposed surface of the damaged portion of the precipitation-strengthened cast product. This makes it possible to prevent a situation where a local deformation or damage occurs at the boundary between the damaged portion of the base material and the weld during and after the repair and the base material needs to be repaired again.

### [Advantageous Effect of Invention]

According to the present disclosure, it is possible to reliably and efficiently repair a precipitation-strengthened cast product.

### [Brief Description of Drawings]

[Fig. 1] Fig. 1 is a diagram illustrating an example of constituent components of a gas turbine provided at a thermal power plant or the like.
[Fig. 2] Fig. 2 is a diagram illustrating an example of the structure of a rotor blade 44.
[Fig. 3] Fig. 3 is a diagram illustrating an example of the procedure of a precipitation-strengthened cast product welding repair method in a first embodiment.
[Fig. 4] Fig. 4 is a diagram explaining an example of a first weld layer formation step in the first embodiment.
[Fig. 5] Fig. 5 is a diagram explaining an example of a second weld layer formation step in the first embodiment.
[Fig. 6] Fig. 6 is a diagram illustrating an example of the procedure of a precipitation-strengthened cast product welding repair method in a second embodiment.
[Fig. 7] Fig. 7 is a diagram explaining an example of a second weld layer formation step and a third weld layer formation step in the second embodiment.
[Fig. 8] Fig. 8 is a diagram illustrating an example of the procedure of a precipitation-strengthened cast product welding repair method in a third embodiment.
[Fig. 9] Fig. 9 is a diagram explaining an example of a first weld layer formation step in the third embodiment.
[Fig. 10] Fig. 10 is a diagram explaining an example of a second weld layer formation step in the third embodiment.

### [Description of Embodiments]

Embodiments of the present disclosure will be described with reference to the drawings.

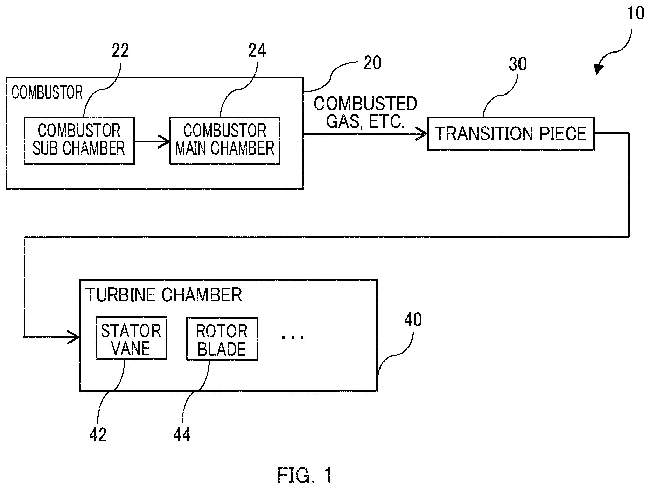

Fig. 1 is a diagram illustrating an example of constituent components of a gas turbine provided at a thermal power plant or the like. A gas turbine 10 is made of a plurality of nickel-cobalt-based heat resistant alloys, for example. Specifically, the gas turbine 10 includes a combustor 20 which includes a combustor sub chamber 22 and a combustor main chamber 24, mixes a fuel with compressed air, and combusts them, a transition piece 30 (transition piece) through which the combusted gas, water vapor, and the like generated in the combustor 20 flow, and a turbine chamber 40 which converts the thermal energy of the combusted gas and the like flowing in from the transition piece 30 into rotational energy. In the turbine chamber 40, a plurality of stator vanes 42 that regulate the flow of the combusted gas and the like and a plurality of rotor blades 44 that compress and convert the combusted gas and the like into rotational energy are arranged alternately. Note that in the present embodiment, each of these constituent components is a precipitation-strengthened cast product obtained by performing precipitation strengthening on a metallic material mainly by aging heat treatment or the like.

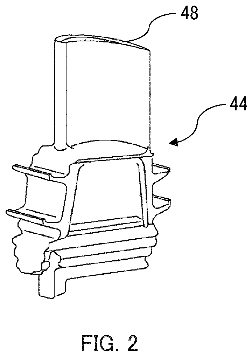

Here, Fig. 2 is a diagram illustrating an example of the structure of a rotor blade 44. In each rotor blade 44, thermal stress is generated due to repetition of starting and stopping of the gas turbine 10, and a loss (thinning) tends to occur particularly at its tip portion 48. Thus, precipitation-strengthened cast product welding repair methods according to embodiments of the present disclosure will be described by taking welding repair of this loss as an example.

### <First Embodiment>

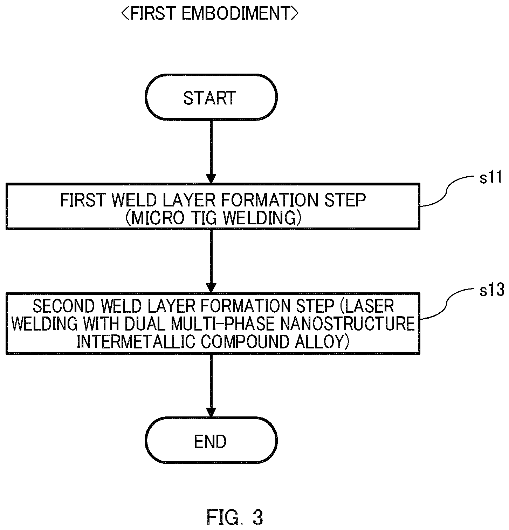

Fig. 3 is a diagram illustrating an example of the procedure of a precipitation-strengthened cast product welding repair method in a first embodiment. Firstly, a first weld layer formation step is carried out in which a first weld layer (build-up layer) is formed at a damaged portion (lost portion) formed at the tip portion 48 of the rotor blade 44 by performing micro TIG (Micro Tungsten Inert Gas) welding (s11).

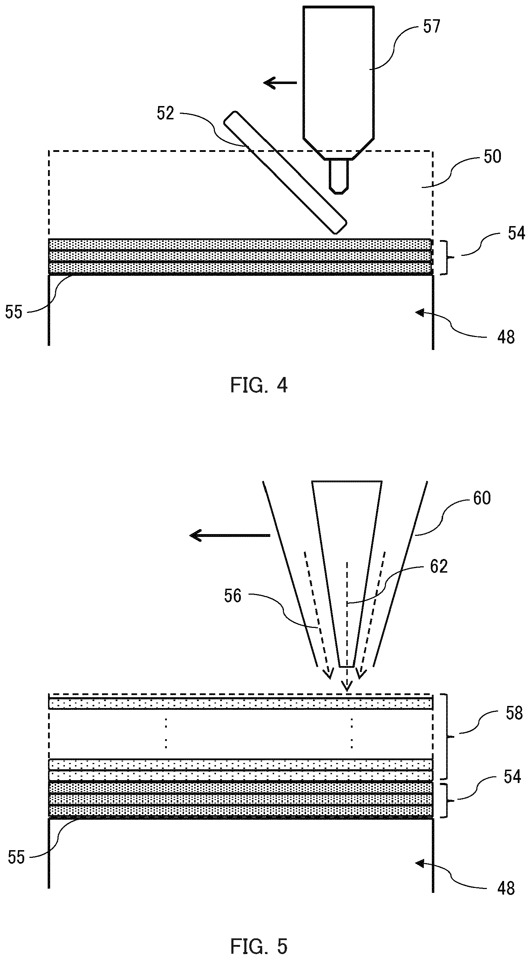

Here, Fig. 4 is a diagram explaining an example of the first weld layer formation step in the first embodiment. In this first weld layer formation step, build-up welding is performed using a welding electrode 52 and a welding torch 57 such that a first weld layer 54 is formed on an exposed surface 55 (lost surface) of a lost portion 50 formed at the tip portion 48 of the rotor blade 44 so as to entirely cover the exposed surface 55 (s11). The first weld layer 54 may be a single weld layer or weld layers including two or more layers.

The material (welding material) of the welding electrode 52 to be used to form the first weld layer 54 is an alloy containing a solid-solution-strengthened metal and having higher toughness than the metallic material of the rotor blade 44 being the base material. Examples of such an alloy include nickel-based alloys.

More specifically, the welding method in the first weld layer formation step is carried out as follows, for example. Firstly, as for the amount of heat input into the base material (the amount of thermal energy to be supplied by the welding torch 57 per unit time), inputting heat to the lost portion 50 with a welding current of a level used in common micro TIG welding generates large thermal stress in the lost portion 50, which leads to a possibility of fracture to (the tip portion 48 of) the rotor blade 44, which is the base material. The welding current therefore needs to be set lower. For example, the welding current is preferably set at 50 A or lower. Note that in the micro TIG welding, the welding speed (the movement speed of the welding torch 57) is low. Thus, necessary heat can be evenly supplied to the entire first weld layer 54 although the welding current is low.

Incidentally, the first weld layer 54 needs to have a certain thickness in order to prevent the occurrence of fracture or cracking (high-temperature fracture) of the repaired portion and a region around it during and after the repair. If, on the other hand, the thickness is too large, the operation time of the micro TIG welding becomes so long that the welding efficiency is impaired. Considering the above, the thickness of the first weld layer 54 is preferably set at about 1/3 of the depth of the lost portion 50 or less, for example. With this configuration, however, a sufficient weld layer cannot be formed if the lost portion 50 is shallow. In this case, it is preferable that the first weld layer 54 have a thickness of about several mm (at least 1 mm).

As illustrated in Fig. 3, a second weld layer formation step of forming a second weld layer (build-up layer) is carried out by performing laser welding (laser cladding) (s13). Note that in this laser welding, a common laser, such as a carbon dioxide laser or a YAG laser, can be used, for example.

Fig. 5 is a diagram explaining an example of the second weld layer formation step in the first embodiment. In the second weld layer formation step, build-up welding is performed using alloy powder 56 made of the nickel-based alloy to be described next to form a second weld layer 58 on the first weld layer 54. As with the first weld layer 54, the second weld layer 58 may be a single weld layer or weld layers including two or more layers.

Here, the alloy powder 56 is a nickel-based alloy containing a dual multi-phase nanostructure intermetallic compound alloy. Specifically, it is a nickel-based alloy in which an eutectoid structure with a D0₂₂ phase (Ni₃Al) and an L1₂ phase (Ni₃V) is formed on the nano-level by casting and solidifying nickel with aluminum and vanadium added thereto at predetermined ratios. Note that the ratios of aluminum and vanadium added and the ratios of other trace elements (such as boron) added are not particularly limited.

Here, the micro TIG welding used in the first weld layer formation step requires a certain amount of welding time since, due to its nature, the heat supply rate per unit time is lower than laser welding. Thus, in the second weld layer formation step, the welding is performed in an efficient manner within a limit within which high-temperature fracture does not occur, in consideration of the time of the operation as a whole.

Specifically, the heat supply rate per unit time in the second weld layer formation step, i.e., the output of a laser beam 62 from a laser apparatus 60, is preferably higher than at least that in the first weld layer formation step (e.g., the output of the laser beam 62 is set at about several KW). Moreover, the welding speed (the movement speed of the laser apparatus 60) is also preferably a speed higher than that in the first weld layer formation step (e.g., about 10 mm/sec).

By forming the second weld layer 58 by a welding method as above, a weld layer of substantially the same shape as a shape corresponding to the lost portion 50 is formed to thereby repair the damaged portion formed at the tip portion 48 of the rotor blade 44.

As described above, in the welding repair method in the present embodiment, the first weld layer 54 is formed at the damaged portion of the base material of the precipitation-strengthened cast product by micro TIG welding (first weld layer formation step), and further the second weld layer 58 is formed on the first weld layer 54 by laser welding higher in heat supply rate than the micro TIG welding (second weld layer formation step). In this way, in the formation of the first weld layer 54, which is the lower layer closer (or adjacent) to the base material, the amount of heat input per unit time is small but the welding speed is low, so that reliable welding is performed. In the formation of the second weld layer 58, which is the upper layer, the amount of heat input per unit time is large and the welding time is short. Further, in the first weld layer formation step, a solid-solution-strengthened welding material having higher toughness than the base material is used while, in the second weld layer formation step, a dual multi-phase nanostructure intermetallic compound is used as the welding material. This relaxes thermal stress applied to the repaired portion and thus prevents damaging of the repaired portion and a region around it during and after the repair (e.g., a reoccurrence of fracture or cracking of the repaired portion) while also rendering the base material tolerant to high temperature and enhancing the wear resistance and corrosion resistance.

Thus, with the precipitation-strengthened cast product welding repair method in the present embodiment, a precipitation-strengthened cast product can be repaired reliably and efficiently by appropriately combining a selection of welding materials and manners of heat supply.

Also, in the precipitation-strengthened cast product welding repair method in the present embodiment, the current for the micro TIG welding in the first weld layer formation step is set at 50 A or lower. This can reliably prevent damaging of the repaired portion and a region around it during and after the repair (e.g., a reoccurrence of fracture or cracking of the repaired portion).

Also, in the precipitation-strengthened cast product welding repair method in the present embodiment, the thickness of the first weld layer 54 is set at 1 mm or more and the thickness of the first weld layer 54 is set at 1/3 or less of the thickness of the entire weld layer. In this way, the welding operation can be completed reliably and quickly. For example, even when the damaged portion is large, the repair can be done within an appropriate time.

Also, in the precipitation-strengthened cast product welding repair method in the present embodiment, the first weld layer 54 is formed so as to cover the exposed surface 55 of the damaged portion of the precipitation-strengthened cast product. This makes it possible to prevent a situation where a local deformation or damage occurs at the boundary between the damaged portion of the base material and the weld during and after the repair and the base material needs to be repaired again.

### <Second Embodiment>

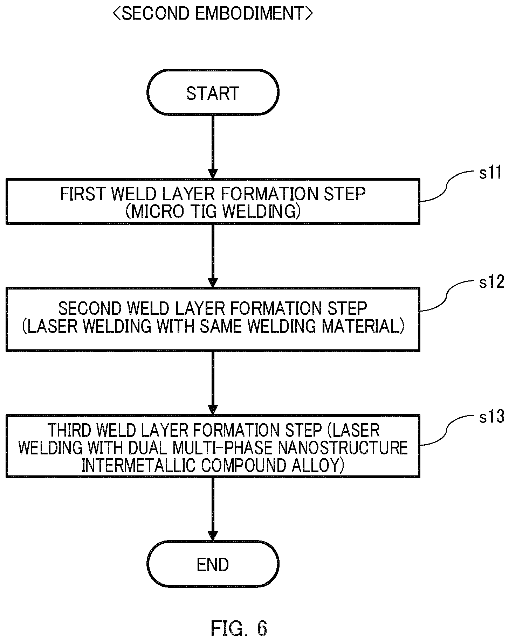

Fig. 6 is a diagram illustrating an example of the procedure of a precipitation-strengthened cast product welding repair method in a second embodiment. A first weld layer formation step of forming a first weld layer 54 is similar to s11 of the first embodiment.

In the first embodiment, the second weld layer 58 (build-up layer) is then formed on the first weld layer 54 by performing laser welding (laser cladding) using a nickel-based alloy containing a dual multi-phase nanostructure intermetallic compound alloy.

In the present embodiment, however, before the formation of the build-up layer with the dual multi-phase nanostructure intermetallic compound alloy, laser welding is performed which is build-up welding using alloy powder made of an alloy of the same materials as the welding electrode 52 used in the first weld layer formation step (the materials do not have to be exactly the same as long as the compositional ratio of the constituent elements is substantially the same) to thereby form a second weld layer 58 made of substantially the same welding material as that in the first weld layer formation step on the first weld layer 54 (s12).

Then , a third weld layer (build-up layer) is formed in a similar manner to the first embodiment on the second weld layer 58 by performing laser welding (laser cladding) using the nickel-based alloy containing the dual multi-phase nanostructure intermetallic compound alloy.

As with the first weld layer 54, the second weld layer 58 and a third weld layer 59 may each be a single weld layer or weld layers including two or more layers.

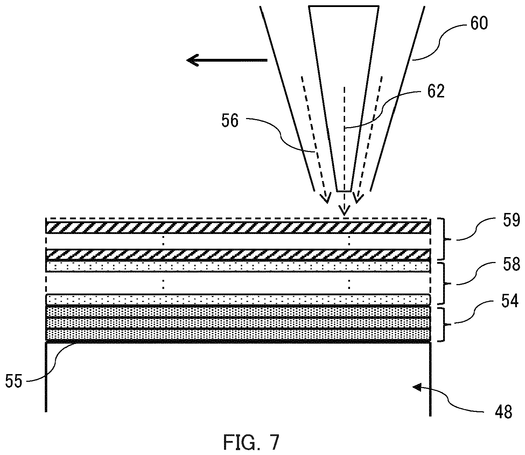

Fig. 7 is a diagram explaining an example of the second weld layer formation step and the third weld layer formation step in the second embodiment. The second weld layer 58 formed in the second weld layer formation step is made of an alloy of the same materials as the first weld layer 54 formed in the first weld layer formation step. Unlike the first weld layer 54 and the second weld layer 58, the third weld layer 59 formed in the third weld layer formation step is made of the nickel-based alloy containing the dual multi-phase nanostructure intermetallic compound alloy.

By forming the second weld layer 58 and the third weld layer 59 as above, weld layers of substantially the same shape as a shape corresponding to the lost portion 50 are formed to thereby repair the damaged portion formed at the tip portion 48 of the rotor blade 44. Note that the thickness ratio of the second weld layer 58 and the third weld layer 59 is set as desired according to the mechanical strength and toughness which the base material is required to have, for example.

As described above, in the precipitation-strengthened cast product welding repair method in the present embodiment, the first weld layer 54 is formed at the damaged portion of the precipitation-strengthened cast product by micro TIG welding (first weld layer formation step), the second weld layer 58 is formed on the first weld layer 54 by laser welding higher in heat supply rate than the micro TIG welding (second weld layer formation step), and additionally the third weld layer 59 is formed on the second weld layer 58 by laser welding higher in heat supply rate than the micro TIG welding (third weld layer formation step). In this way, in the formation of the first weld layer 54, which is the lower layer closest (or adjacent) to the base material, the amount of heat input per unit time is small but the welding speed is low, so that reliable welding is performed. In the formation of the second and third weld layers 58 and 59, which are the upper layers, the amount of heat input per unit time is large and the welding time is short. Further, in the first weld layer formation step and the second weld layer formation step, a solid-solution-strengthened welding material containing a solid-solution-strengthened alloy and having higher toughness than the base material is used while, in the third weld layer formation step, a dual multi-phase nanostructure intermetallic compound is used as the welding material. This relaxes thermal stress applied to the repaired portion and thus prevents damaging of the repaired portion and a region around it during and after the repair (e.g., a reoccurrence of fracture or cracking of the repaired portion) while also rendering the base material tolerant to high temperature and enhancing the wear resistance and corrosion resistance.

Thus, with the precipitation-strengthened cast product welding repair method in the present embodiment, a cast product can be repaired reliably and efficiently by appropriately combining a selection of welding materials and manners of heat supply.

Also, in the precipitation-strengthened cast product welding repair method in the present embodiment, the current for the micro TIG welding is set at 50 A or lower. This can reliably prevent damaging of the repaired portion and a region around it during and after the repair (e.g., a reoccurrence of fracture or cracking of the repaired portion).

Also, in the precipitation-strengthened cast product welding repair method in the present embodiment, the thickness of the first weld layer 54 is set at 1 mm or more and the thickness of the first weld layer 54 is set at 1/3 or less of the thickness of the entire weld layer. In this way, the welding operation can be completed reliably and quickly. For example, even when the damaged portion is large, the repair can be done within an appropriate time.

Also, in the precipitation-strengthened cast product welding repair method in the present embodiment, the first weld layer 54 is formed so as to cover the exposed surface of the damaged portion of the precipitation-strengthened cast product. This makes it possible to prevent a situation where a local deformation or damage occurs at the boundary between the damaged portion of the base material and the weld during and after the repair and the base material needs to be repaired again.

### <Third Embodiment>

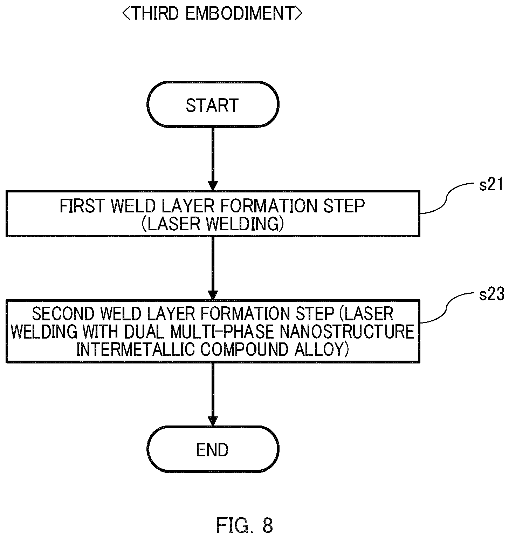

Fig. 8 is a diagram illustrating an example of the procedure of a precipitation-strengthened cast product welding repair method in a third embodiment. In the present embodiment, unlike the first embodiment, laser welding is used for both a first weld layer 54 and a second weld layer 58 (s21, s23).

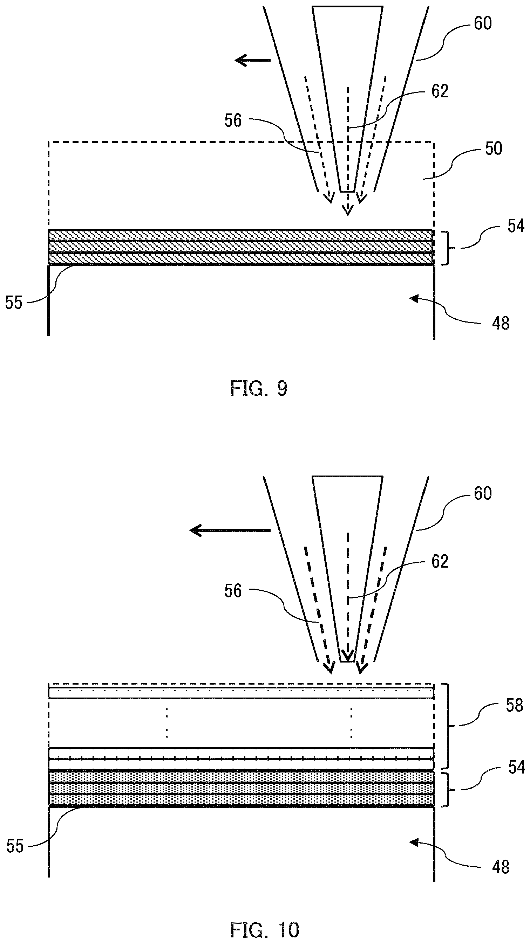

Fig. 9 is a diagram explaining an example of a first weld layer formation step in the third embodiment. Also, Fig. 10 is a diagram explaining an example of a second weld layer formation step in the third embodiment.

As with the first embodiment, the welding material to be used to form the first weld layer 54 is an alloy containing a solid-solution-strengthened metal and having higher toughness than the metallic material of the rotor blade 44 being the base material. Also, as with the first embodiment, the welding material to be used to form the second weld layer 58 is a nickel-based alloy containing a dual multi-phase nanostructure intermetallic compound alloy.

As for a specific welding method, the heat supply rate (the output of the laser beam 62) per unit time in the formation of the second weld layer 58 is set higher than that for the first weld layer 54, and the welding speed (the movement speed of the laser apparatus 60) in the formation of the second weld layer 58 is set higher than that for the first weld layer 54. Also, the rate of supply of the alloy powder 56 in the formation of the second weld layer 58 is set higher than that for the first weld layer 54.

For example, the output of the laser beam 62 is set at about 1 KW in the formation of the first weld layer 54 and is set about several times higher than that in the formation of the second weld layer 58. Further, the welding speed in the formation of the second weld layer 58 is also set about several times higher than that in the formation of the first weld layer 54 (several mm/sec). Furthermore, the rate of supply of the alloy powder 56 in the formation of the second weld layer 58 is set several times higher than that in the formation of the first weld layer 54. Note that the thicknesses of the first weld layer 54 and the second weld layer 58 are similar to those in the first embodiment.

By forming the first weld layer 54 and the second weld layer 58 by a welding method as above, weld layers of a shape corresponding to the lost portion 50 are formed to thereby repair the damaged portion formed at the tip portion 48 of the rotor blade 44.

As described above, in the precipitation-strengthened cast product welding repair method in the present embodiment, the first weld layer 54 is formed at the damaged portion of the base material of the precipitation-strengthened cast product by laser welding (first weld layer formation step), and further the second weld layer 58 is formed on the first weld layer 54 by laser welding using a dual multi-phase nanostructure intermetallic compound as the welding material and being higher in heat supply rate than the first laser welding (second weld layer formation step). In this way, in the formation of the first weld layer 54, which is the lower layer closer (or adjacent) to the base material, the amount of heat input per unit time is small but the welding speed is low, so that reliable welding is performed. In the formation of the second weld layer 58, which is the upper layer, the amount of heat input per unit time is large and the welding time is short. Further, in the first weld layer formation step, a solid-solution-strengthened welding material having higher toughness than the base material is used while, in the second weld layer formation step, a dual multi-phase nanostructure intermetallic compound is used as the welding material. This relaxes thermal stress applied to the repaired portion and thus prevents damaging of the repaired portion and a region around it during and after the repair (e.g., a reoccurrence of fracture or cracking of the repaired portion) while also rendering the base material tolerant to high temperature and enhancing the wear resistance and corrosion resistance.

Thus, with the precipitation-strengthened cast product welding repair method of the present disclosure, a precipitation-strengthened cast product can be repaired reliably and efficiently by appropriately combining a selection of welding materials and welding methods differing in the manner of heat supply.

Also, in the precipitation-strengthened cast product welding repair method in the present embodiment, the thickness of the first weld layer 54 is set at 1 mm or more and the thickness of the first weld layer 54 is set at 1/3 or less of the thickness of the entire weld layer. In this way, the welding operation can be completed reliably and quickly. For example, even when the damaged portion is large, the repair can be done within an appropriate time.

Also, in the precipitation-strengthened cast product welding repair method in the present embodiment, the first weld layer 54 is formed so as to cover the exposed surface of the damaged portion of the precipitation-strengthened cast product. This makes it possible to prevent a situation where a local deformation or damage occurs at the boundary between the damaged portion of the base material and the weld during and after the repair and the base material needs to be repaired again.

Embodiments of the present disclosure described above are simply to facilitate understanding of the present disclosure and are not in any way to be construed as limiting the present disclosure. The present disclosure may variously be changed or altered without departing from its essential features and encompass equivalents thereof.

For example, the welding methods in the embodiments may be combined as appropriate or partly omitted.

Also, in the embodiments, methods of repairing damage of the tip portion 48 of the rotor blade 44 by welding have been described. However, the welding repair methods according to the embodiments are applicable to welding repair of heat-resistant alloy members in general, including constituent components of the gas turbine 10 (combustor 20, transition piece 30, stator vanes 42, rotor blades 44).

### [Reference Signs List]

- 10: Gas turbine
- 20: Combustor
- 22: Combustor sub chamber
- 24: Combustor main chamber
- 30: Transition piece
- 40: Turbine chamber
- 42: Stator vane
- 44: Rotor blade
- 48: Tip portion
- 50: Lost portion
- 52: Welding electrode
- 54: First weld layer
- 55: Exposed surface
- 56: Powder
- 57: Welding torch
- 58: Second weld layer
- 59: Third weld layer
- 60: Laser apparatus
- 62: Laser beam

## Claims

1. A precipitation-strengthened cast product welding repair method being a method of repairing a damaged portion of a precipitation-strengthened cast product, the method comprising:
a first weld layer formation step of forming a first weld layer on a surface of the damaged portion by micro TIG welding using a solid-solution-strengthened welding material having higher toughness than the cast product; and
a second weld layer formation step of forming a second weld layer on the first weld layer by building up the second weld layer by laser welding using a dual multi-phase nanostructure intermetallic compound as a welding material and being higher in heat supply rate than the micro TIG welding.

2. A precipitation-strengthened cast product welding repair method being a method of repairing a damaged portion of a precipitation-strengthened cast product, the method comprising:
a first weld layer formation step of forming a first weld layer on a surface of the damaged portion by micro TIG welding using a solid-solution-strengthened welding material having higher toughness than the cast product;
a second weld layer formation step of forming a second weld layer on the first weld layer by laser welding using a same welding material as the first weld layer formation step and being higher in heat supply rate than the micro TIG welding; and
a third weld layer formation step of forming a third weld layer on the second weld layer by building up the third weld layer by laser welding using a dual multi-phase nanostructure intermetallic compound as a welding material and being higher in heat supply rate than the micro TIG welding.

3. A precipitation-strengthened cast product welding repair method being a method of repairing a damaged portion of a precipitation-strengthened cast product, the method comprising:
a first weld layer formation step of forming a first weld layer on a surface of the damaged portion by laser welding using a solid-solution-strengthened welding material having higher toughness than the cast product; and
a second weld layer formation step of forming a second weld layer on the first weld layer by building up the second weld layer by laser welding using a dual multi-phase nanostructure intermetallic compound as a welding material and being higher in heat supply rate than the laser welding.

4. The precipitation-strengthened cast product welding repair method according to claim 1 or 2, wherein a current for the micro TIG welding in the first weld layer formation step is set at 50 A or lower.

5. The precipitation-strengthened cast product welding repair method according to any one of claims 1 to 3, wherein a thickness of the first weld layer is set at 1 mm or more and 1/3 or less of a total thickness of the weld layers.

6. The precipitation-strengthened cast product welding repair method according to any one of claims 1 to 3, wherein in the first weld layer formation step, the first weld layer is formed so as to cover an exposed surface of the damaged portion.
